# EUROPEAN PATENT APPLICATION

(11) **EP 1 583 284 A1**
(43) Date of publication of application: **05.10.2005**
(21) Application number: 05251625.9
(22) Date of filing: 17.03.2005
(51) Int. Cl.: H04L 12/28, H04Q 7/38

(54) **Access point controlled load balancing in a multi-channel wireless communciation system**

(30) Priority: 23.03.2004 US 808174
(71) Applicant: SAMSUNG ELECTRONICS CO., LTD., Gyeonggi-do (KR)
(72) Inventor: Sharma, Sanjeev K., Woodbury, MN55125 (US)
(74) Representative: Waddington, Richard

(57) **Abstract**

Method and system for load balancing in a wireless communication system, including an access node (210), are disclosed. In one aspect of the invention, the method comprises i) communicating data wirelessly between the access node (210) and a plurality of terminals (220-260) via a plurality of channels, wherein the plurality of terminals (220-260) and the access node (210) form a wireless local area network, ii) determining, at the access node (210), an overloaded channel from the plurality of channels and iii) transferring, at the access node (210), a load from the overloaded channel to a less loaded channel of the plurality of channels.

## Description

This invention relates to a data communication system, and particularly to a system and method of load balancing in a wireless communication system including at least one access point.

Recently a variety of computer network systems have been widely used. Such network systems include a local area network (LAN), a wide area network (WAN), a wireless local area network (WLAN), a wireless personal area network (WPAN), a general packet radio service (GPRS) network and other wireless network systems. The network systems allow communication between various end terminals such as a personal computer (desktop, lap top, palm top), a mobile phone, or other portable communication devices. It is typical that the above network systems include at least one bridge element such as an access node (or access point) where user traffic enters and exits a communications network.

In most of the above networks, when an end terminal device transmits data, it encapsulates the data into a packet with the destination address at the header of the packet. The packet is then transmitted onto a network. All other connected devices read the address at the head of the packet, but a device will only read the entire packet including the data if it recognizes its own address in the header. Once the packet has been read, the device responds to the source (the source is also in the packet header). The response could tell the source that the data was received successfully, or that it was corrupt and retransmission is necessary.

This packet transmission has been widely used because it allows a plurality of terminals on a network to send data at the same time and thereby share an interconnecting communication media. However, its use may be problematic when a network is heavily loaded. When the media is heavily congested, some access points on the network may also be overloaded with traffic. In this situation, some of the packets can be delayed or sometimes lost. This is particularly noticeable in networks operating at a high bit rate. Thus, there has been a need to provide load balancing of a network system.

According to the present invention there is provided an apparatus and method as set forth in the appended claims. Preferred features of the invention will be apparent from the dependent claims, and the description which follows.

According to one aspect of the present invention there is provided a method of load balancing in a terrestrial wireless communication system including an access node. The method comprises i) communicating data wirelessly between the access node and a plurality of terminals via a plurality of channels, wherein the plurality of terminals and the access node form a wireless local area network, ii) determining, at the access node, an overloaded channel from the plurality of channels and iii) transferring, at the access node, a load from the overloaded channel to a less loaded channel of the plurality of channels.

According to another aspect of the present invention there is provided a method of load balancing in a wireless communication system including an access point, the method comprising i) providing a plurality of channels between the access point and a plurality of terminals such that the access point is in data communication with the plurality of terminals via the plurality of channels, ii) determining an overloaded channel from the plurality of channels based on at least one of: the number of packets pending in each of the channels and bandwidths which are currently being used in each of the channels. The method preferably also comprises iii) selecting a link from the overloaded channel and iv) transferring the selected link to a less loaded channel of the plurality of channels based on at least one of: the quality of service level required for the selected link and a received signal strength indication (RSSI) value in the less loaded channel.

According to another aspect of the present invention there is provided a method of load balancing in a wireless communication system including an access point, the method comprising i) communicating data between the access point and a plurality of terminals via a plurality of channels, ii) calculating loads of each of the plurality of channels based on at least one of: the number of packets pending in each of the channels and bandwidths which are currently being used in each of the channels and iii) determining an overloaded channel from the plurality of channels based on the calculated loads. The method preferably also comprises iv) selecting a link from the overloaded channel, v) selecting a new channel, to which the selected link is transferred, from the plurality of channels, wherein the new channel is less loaded than the overloaded channel, vi) determining the quality of service level required for the selected link and a received signal strength indication (RSSI) value in the new channel and vii) transferring the selected link to the new channel in case the determined RSSI value is equal to or greater than that of the selected link or greater than a predefined threshold RSSI value, and in case the quality of service level required for the selected link is met in the new channel.

According to another aspect of the present invention there is provided an apparatus for load balancing in a communication system including an access point, the apparatus comprising a control module and a memory. The control module is preferably configured to i) communicate data wirelessly between the access point and a plurality of terminals via a plurality of channels, wherein the plurality of terminals and the access point form a wireless local area network, ii) determine an overloaded channel from the plurality of channels and iii) transfer a load from the overloaded channel to a less loaded channel of the plurality of channels. The memory is preferably in data communication with the control module and is preferably configured to store information to be used for the control module performing the load balancing.

According to a still further aspect of the present invention there is provided a system for load balancing in a wireless communication system including at least one access node, each access node employing a plurality of channels. Preferably, each access node is configured to determine a load imbalance based on at least one of the number of packets pending in each of the plurality of channels and bandwidths which are currently being used in each of the plurality of channels, and wherein if there is an overloaded channel, the access node is configured to select a link from an overloaded channel, and transfer the selected link to a less loaded channel based on at least one of the quality of service level required for the selected link and a received signal strength indication (RSSI) value in the less loaded channel.

According to a still further aspect of the present invention there is provided a system for load balancing in a terrestrial wireless communication system including an access node. The system preferably comprises i) means for communicating data wirelessly between the access node and a plurality of terminals via a plurality of channels, wherein the plurality of terminals and the access node form a wireless local area network, ii) means for determining, at the access node, an overloaded channel from the plurality of channels and iii) means for transferring, at the access node, a load from the overloaded channel to a less loaded channel of the plurality of channels.

According to a still further aspect of the present invention there is provided a computer readable medium storing a program which performs a method of load balancing in a terrestrial wireless communication system including an access node. The method preferably comprises i) communicating data wirelessly between the access node and a plurality of terminals via a plurality of channels, wherein the plurality of terminals and the access code form a wireless local area network, ii) determining, at the access node, an overloaded channel from the plurality of channels and iii) transferring, at the access node, a load from the overloaded channel to a less loaded channel of the plurality of channels.

For a better understanding of the invention, and to show how embodiments of the same may be carried into effect, reference will now be made, by way of example, to the accompanying diagrammatic drawings in which:
Figure 1 illustrates a typical wireless network system that performs load balancing of the entire system;
Figure 2 illustrates a load balancing system according to one embodiment of the invention;
Figure 3 illustrates an exemplary block diagram of the access point according to one embodiment of the invention;
Figure 4 illustrates various parameters or information on which the access point performs the load balancing according to one embodiment of the invention;
Figure 5 illustrates an exemplary flowchart which shows a load balancing procedure according to one embodiment of the invention; and
Figure 6 illustrates a load balancing system according to another embodiment of the invention.

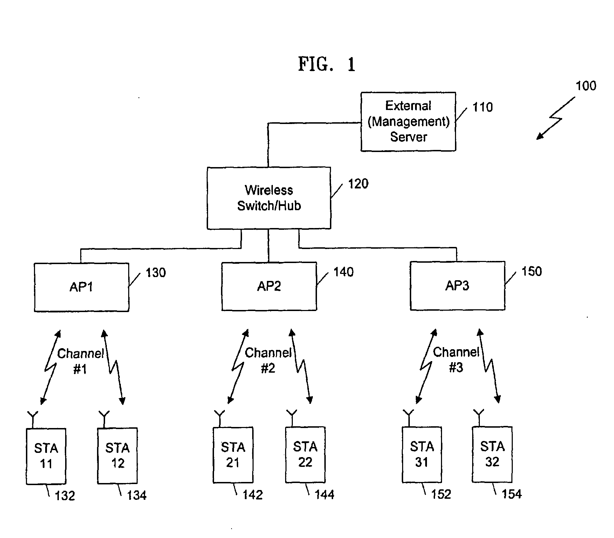

Figure 1 illustrates a typical wireless network system 100 that performs load balancing of the entire system. The network system 100 may be implemented with an IEEE 802.11a/11b/11g network, a wireless local area network (WLAN), a wireless personal area network (WPAN), a general packet radio service (GPRS) network, a global system for mobile communication (GSM) network, a code division multiple access (CDMA) network, a Bluetooth network or other wireless networks. The system 100 typically includes an external (or management) server 110, a wireless switch (or hub) 120 and a plurality of access points 130-150.

Each access point 130-150, which is also typically referred to "an access node" or "a wireless bridge", is in data communication with stations 132-134, 142-144 and 152-154, respectively. Each access point 130-150 is in data communication with the wireless switch 120. Each access point 130-150 comprises Airespace 1200, available from Airespace Inc., IronPoint, available from Foundry Networks, or Altitude 300 and Summit 300, available from Extreme Networks.

The wireless switch 120 is in data communication with the external server 110. The external (or management) server 110, which is an optional element in certain network configurations, may include management software that manages the system 100. The external server 110 may be connected with other network system (not shown).

Each of the stations 132-134, 142-144 and 152-154 is typically referred to as an end terminal or a user device.

Each of the stations 132-134, 142-144 and 152-154 may include, for example, a personal computer (desktop, lap top, palm top), a mobile phone, or other portable communication devices such as a hand-held PC, a wallet PC and a personal digital assistant (PDA). The data communication between each access point 130-150 and each of the stations 132-134, 142-144 and 152-154 is typically performed over a single channel (channel 1, channel 2 and channel 3, respectively).

A description of the general operation of a typical network system, including a wireless switch and an access point, can be found, for example, at "http://www.airespace.com/products/AS_4000.php" which is incorporated by reference herein as Annex 1.

The system 100 of Figure 1 performs load balancing as discussed below. Each access point 130-150 sends information regarding its current load to the wireless switch 120. Such information may include the number of pending packets in each channel, required bandwidth (resources needed to provide the Quality of Service) and a received signal strength indication (RSSI). The wireless switch 120 may provide the received information to the external server 110. The wireless switch 120 or the external server 110 can determine which access point is overloaded in the system 100 based on the information received from the access points 130-150.

If it is determined that channel 1 is overloaded and resources are available in other access points (access point 140 or 150), the wireless switch 120 sends a proprietary signal, which is not recognized by a communication standard, for example, IEEE 802.11a/b/g, to the overloaded access point (access point 130). The access point 130 sends a message, which requests the associated stations 132 and 134 to switch to another access point (access point 140 or 150). The communication of the message between the access point 130 and the stations 132-134 may be implemented with either a standard signal or a proprietary signal.

The system 100 illustrated in Figure 1 requires extra hardware equipment such as the wireless switch 120 and/or the external server 110 in order to perform the load balancing. In addition, the system 100 requires an extra cost for the management software of the external server 110. Furthermore, each access point 130-150 needs to send a proprietary signal specifying its load to the wireless switch 120.

One aspect of the invention provides a load balancing system which does not require extra hardware equipment such as a wireless switch, or an external server, or additional software such as management software. In one embodiment of the invention, the access point acts as a local and centralized server which makes its own decision on load balancing based on information such as channel loads, quality of service (QoS) requirements and the received signal strength indication (RSSI) values of the associated channels in order to transfer a load from an overloaded channel to an underloaded channel.

One embodiment of the invention includes at least one access point, where each access point employs multiple channels. Each access point determines a load imbalance based on at least one of the number of packets pending in each of the multiple channels and the current bandwidth, e.g., measured in bits per second, in each of the channels. If there is an overloaded channel, the access point selects a link from the overloaded channel, and transfers the selected link to a new channel, which is a less loaded channel, based on at least one of the QoS required for the selected link and an RSSI value of the new channel. In one embodiment, the access point is programmed to perform the load balancing method according to embodiments of the invention without changing its hardware configuration.

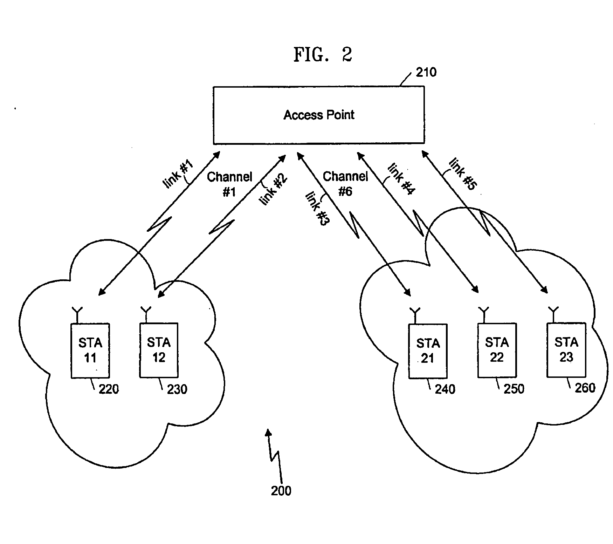

Figure 2 illustrates a load balancing system 200 according to one embodiment of the invention. In one embodiment of the invention, the system 200 includes a plurality of access points each of which independently performs load balancing. However, for convenience, only one access point 210 is shown in Figure 2. In one embodiment, the access point 210 is in data communication with other conventional communication network system (not shown). In one embodiment of the invention, the system 200 is implemented with or incorporated into a WLAN, a WPAN, a GPRS network, a GSM network, a CDMA network, a Bluetooth network or other wireless networks.

In one embodiment of the invention, data communication within the system 200 and with other communication network is carried out using IEEE 802.11a/11b/11g, IEEE 802.15.3/15.3a or other wireless communication standards. The specification of IEEE 802.11a/11b/11g can be found, for example, at http://standards.ieee.org/getieee802/802.11.html. The specification of IEEE 802.15.3/15.3a can be found, for example, at http://standards.ieee.org/getieee802/802.15.html. The specifications of IEEE 802.11a/11b/11g and 802.15.3/15.3a are incorporated herein by reference, and are in any event known to the skilled worker in this field.

In one embodiment of the invention, the access point 210 includes a multiple channel medium access control (MC-MAC) based access point. The medium access control (MAC) is an effective methology that allows devices connected to a network system to share their interconnecting media. Due to the shared nature of the media, a MC-MAC based access point allows more than one device to send data at the same time. In one embodiment, the access point 210 can handle more than two channels, although only two channels (channel 1, 6) are shown in Figure 2.

Referring to Figure 2, the access point 210 is in data communication with stations 220 and 230 via channel 1. The channel 1 includes links 1 and 2 which provide data communication between the stations 220, 230 and the access point 210, respectively. The access point 210 is in data communication with stations 240-260 via channel 6. The channel 6 includes the links 3-5 which provide data communication between the stations 240-260 and the access point 210, respectively. In one embodiment of the invention, more than three stations (not shown) in a channel are in data communication with the access point 210 via additional links (not shown) of the channel. In another embodiment of the invention, there can be more than three channels which provide data communication between the access point 210 and stations (not shown).

In one embodiment, the access point 210 determines which one of channels 1 and 6 is overloaded based on the number of packets pending in each of the channels 1 and 6. In another embodiment, the access point 210 determines an overloaded channel based on the currently used bandwidth in each channel. If there is an imbalance of a load in the channels, the access point 210 balances the overall load by transferring one or more links from the overloaded channel to an underloaded (or less loaded) channel.

In one embodiment, the access point 210 selects a link from an overloaded channel (for example, channel 6) and transfers the selected link to a less loaded channel (for example, channel 1). In another embodiment, the access point 210 selects a link from an overloaded channel (for example, channel 6) and swaps the selected link with a link of the new channel (for example, channel 1).

In one embodiment, the access point 210 transfers the selected link to a new channel or swaps the selected link with a link of the new channel if the QoS requirement for the selected link is met in the new channel. In another embodiment, the access point 210 transfers the selected link to a new channel or swaps the selected link with a link of the new channel if an RSSI value in the new channel or the RSSI value of a link of the new channel is equal to or greater than that of the old link, or greater than a threshold RSSI value.

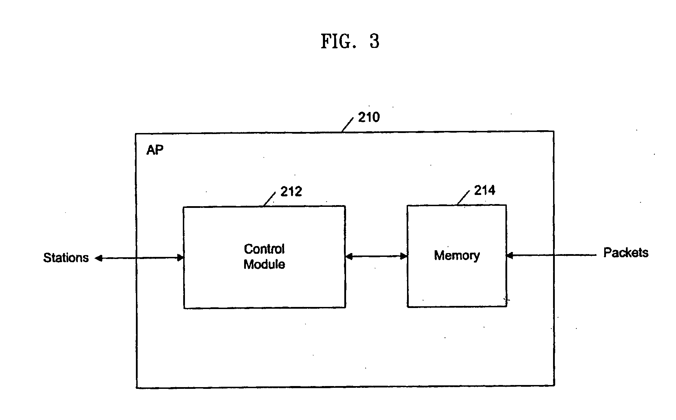

Figure 3 illustrates an exemplary block diagram of the access point 210. In one embodiment, the access point 210 includes a control module 212 and a memory 214. The memory 214 is in data communication with the control module 212. In one embodiment, the memory 214 stores information which is used by the access point 210 to perform the load balancing according to embodiments of the invention. Such information may include, but is not limited to, the number of pending packets, an RSSI value and quality of service (QoS) levels.

The RSSI value can be determined based on the signal strength of a received packet at either access point 210 or each station 220-260. In one embodiment, the RSSI value can be obtained from the relationship, defined in each access point 210 or each station 220-260, between the received signal strengths and RSSI values. As an example, the received signal strength of "70dB" can be assigned an RSSI value of "80" in one access point or station. As another example, the received signal strength of "70dB" can be assigned an RSSI value of "100" in another access point or station. This can be implemented, for example, by a table lookup algorithm.

The QoS levels are generally included in the header section of a packet that the access point 210 receives. As discussed above, the RSSI value can be determined based on the signal strength of a received packet. In one embodiment, the memory 214 may include a random access memory (RAM), a programmable ROM, a flash memory, EEPROM and so on. In one embodiment, the control module 212 is in data communication with the memory 214 via a wireless communication standard protocol such as IEEE 802.11a/11b/11g. In another embodiment, the control module 212 stores such information and performs load balancing based on the information without using a memory.

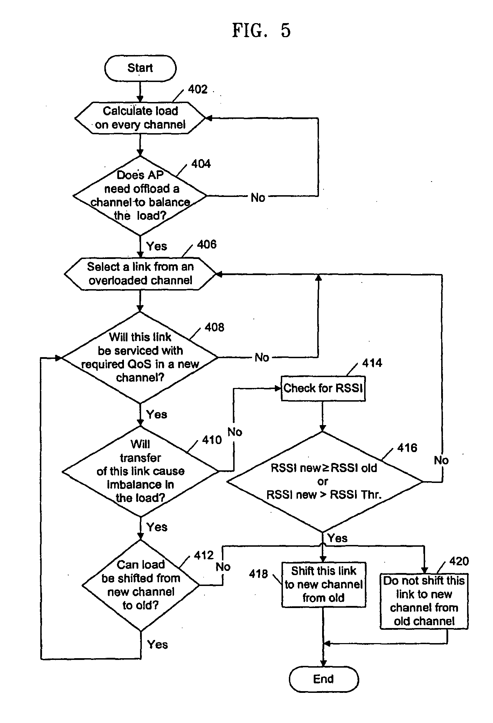

In one embodiment, the control module 212 includes a processor configured to or programmed to perform the load balancing method according to embodiments of the invention such as a procedure illustrated in Figure 5. The program may be stored in the control module 212 or the memory 214 according to the embodiment. The control module 212 may have a configuration based on Intel Corporation's family of microprocessors, such as the Pentium family and Microsoft Corporation's WINDOWS operating systems such as WINDOWS 95, WINDOWS 98, WINDOWS 2000 or WINDOWS NT.

In another embodiment, the control module 212 is implemented with a variety of computer platforms using a single chip or multichip microprocessors, digital signal processors, embedded microprocessors, microcontrollers, etc. In another embodiment, the control module 212 is implemented with a wide range of operating systems such as Unix, Linux, Microsoft DOS, Microsoft Windows 2000/9x/ME/XP, Macintosh OS, OS/2 and the like.

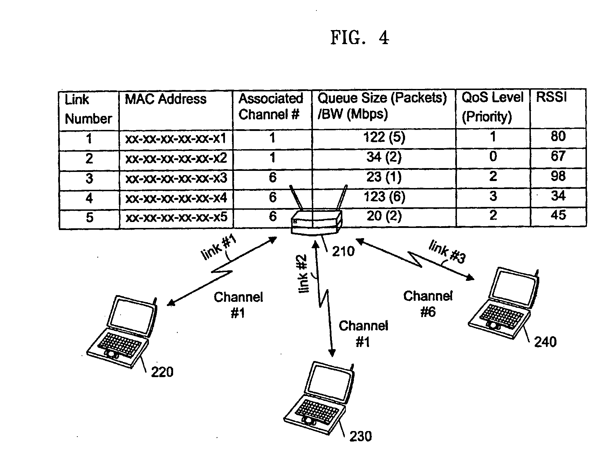

Referring to Figures 4 and 5, the operation of the control module 212 or the access point 210 will be described in more detail. Figure 4 is an exemplary figure that illustrates various parameters or information on which the access point 210 performs load balancing according to embodiments of the invention. The link numbers 1 through 5 and the associated channel numbers 1 and 6 shown in Figure 4 are the same as those shown in Figure 2. In one embodiment, each of the stations 220-260 associated with the five links has its own MAC address, which identifies the stations 220-260 in a MAC based network system.

Referring to Figure 4, the information includes a queue size (number of pending packets), a bandwidth which is currently being used, a QoS (priority) level, and an RSSI value. The examples of the queue sizes, the QoS levels, and the RSSI values illustrated in Figure 4 are taken from IEEE 802.11a, 11b or 11g. Other standards, either known today or developed in the future, may have different values for the same communication circumstances. For example, IEEE 802.11a and 11g can support the maximum bandwidth capacity of 54Mbps and IEEE 802.11b can support the 11Mbps maximum bandwidth capacity.

The numbers of pending packets in the links are 122, 34, 23, 123 and 20, respectively. The more pending packets, the more load in the link. The bandwidths which are currently being used in the links are 5, 2, 1, 6 and 2Mbps, respectively. The links 1 and 2 are associated with channel 1 and the links 3 through 5 are associated with channel 6 as illustrated in Figures 2 and 4. Thus, the total bandwidth, which is currently being used in channel 1, is 7Mbps (5+2). The total bandwidth of 9Mbps (1+6+2) is currently being used in channel 6.

The QoS levels for the links are 1, 0, 2, 3 and 2, respectively. Quality of Service is a measure of network performance that reflects the network's transmission quality and service availability. QoS can come in the form of traffic policy in which the transmission rates are limited, thereby guaranteeing a certain amount of bandwidth will be available to applications (transmitted data). As discussed above, QoS level information is generally provided on the header of a received packet.

The level of QoS is determined from the type of services requested. IEEE 802.1D specifies 8 priority levels (0-7) where 0 is the lowest level and 7 is the highest level. For example, video data may be assigned the highest number. In contrast, text data or audio data may be assigned a relatively low number. In one embodiment, in order to determine a QoS level in a certain channel or link associated with a station, two parameters (average time delay and number of lost packets) are defined. For example, a high QoS level generally requires a relatively small amount of an average time delay (e.g., 5 mm seconds) and a minimum or no loss of packets (e.g., less than 1% of loss). In contrast, a low QoS level generally allows a relatively greater amount of an average time delay (e.g., 30mm seconds) and a relatively greater amount of loss of packets (e.g., greater than 5% of loss).

In another embodiment, the levels of QoS requirements can be determined based on profiles. A profile is assigned to each application (video data, audio data or file, etc.) to be transmitted. In one embodiment, a profile has three parameters: bandwidth, number of lost packets and average time delay. Instead of determining individual parameters separately, the QoS requirements can be efficiently determined based on checking the profile assigned to each application. Each profile can be changed or updated.

The RSSI values for the links are 80, 67, 98, 34 and 45, respectively. RSSI generally indicates how well the local station receives the remote unit's transmission, typically measured in dBm. The higher the RSSI value, the more reliable the transmission performed. The examples of RSSI values illustrated in Figure 4 are taken from IEEE 802.11a, 11b or 11g. In other communication standards, the RSSI values may be of a different order. In addition, a (predefined) threshold RSSI value can also be dependent on the type of a communication standard. That is, a different standard may have a different threshold RSSI value.

In one embodiment, the control module 212 or the access point 210 is aware of the maximum bandwidth capacity of a channel since if a communication standard is determined for a channel, the maximum bandwidth capacity is automatically determined. In addition, the control module 212 or the access point 210 can obtain the bandwidth which is currently being used in a channel based on, for example, the number of pending packets.

Figure 5 illustrates an exemplary flowchart which shows a load balancing procedure according to one embodiment of the invention. In one embodiment, the load balancing procedure is implemented in a conventional programming language, such as C or C++ or another like programming language. In one embodiment of the invention, the program is stored on a computer accessible storage medium at the access point 210. In one embodiment, it is possible that the program is stored on a computer accessible storage medium of a wireless switch or an external server if the network system includes the wireless switch and the server. In another embodiment, the program can be stored in other system locations so long as it can perform load balancing according to embodiments of the invention. The storage medium may comprise any of a variety of technologies for storing information. In one embodiment, the storage medium comprises a random access memory (RAM), hard disks, floppy disks, digital video devices, compact discs, video discs, and/or other optical storage mediums, etc.

Referring to Figure 5, the control module 212 or the access point 210 calculates loads on every channel (402). In one embodiment, the control module 212 or the access point 210 calculates loads based on the bandwidth which is currently being used in each of the channels. For example, the load of channel 1 is calculated as 7 (5+2), and the load of channel 6 is calculated as 9 (1+6+2). In another embodiment, the control module 212 or the access point 210 calculates loads based on the number of total packets pending in each of the channels. For example, the load of channel 1 is calculated as 156 (122+34), and the load of channel 6 is calculated as 166 (23+123+20). For convenience, hereinafter the calculated load will refer to the bandwidth which is currently being used in each channel.

In one embodiment, each of the channels of the access point 210 adopts the same communication standard for data communication. For example, one of IEEE 802.11a or 11b or 11g is used for all of the channel communications. As discussed above, 802.11a and 11g can support 54Mbps and 802.11b can support 11Mbps. If the same standard is used for both of the channels 1 and 6 in Figure 4, the maximum channel capacity is the same for both of the channels 1 and 6. Thus, if a greater bandwidth is being used in channel 1 than channel 6, channel 1 is determined as relatively overloaded than channel 6. In this situation, channel 6 is determined as relatively underloaded or less loaded than channel 1.

In another embodiment, each of the channels of the access point 210 uses a different communication standard for data communication. For example, IEEE 802.11b can be used for channel 1 communication and IEEE 802.11a or 11g can be used for channel 6 communications. In this situation, whether a channel is overloaded or not is determined based on the normalized values of the total loads of each of the channels. For example, if 8Mbps is the total load of channel 1 (802.11b) and 34Mbps is the total load of channel 6 (802.11a/11g), the normalized total loads for channels 1 and 6 are 8/11 (0.73) and 34/54 (0.63), respectively. From the normalized values, channel 1 is determined as relatively overloaded and channel 6 is determined as relatively underloaded.

The control module 212 or the access point 210 determines whether the access point 210 needs to offload a channel in order to balance the load (404). Referring to Figure 4, the total calculated loads of channels 1 and 2 are 7 and 9, respectively. Thus, in one embodiment, the control module 212 or the access point 210 determines that a load needs to be transferred from channel 6 to channel 1. If it is determined that the access point 210 does not need to offload a channel, procedure 402 is performed.

If it is determined in procedure 404 that the access point 210 needs to offload a channel, the control module 212 or the access point 210 selects a link from the overloaded channel (for example, channel 6 in Figure 4) (406). In one embodiment, the control module 212 or the access point 210 selects a link (link 3), which has the least load (1Mbps), from the overloaded channel. In another embodiment, the control module 212 or the access point 210 selects either a highly loaded link (for example, link 4 in Figure 4) first or a lightly loaded link (for example, link 3 or 5 in Figure 4) first.

The control module 212 or the access point 210 determines whether this selected link will be serviced with a required QoS in the new channel (channel 1) (408). As discussed above, two parameters (average time delay, loss of packets) are generally used to determine whether a required QoS is met or not. The control module 212 or the access point 210 checks whether there is availability of resources in a new channel to meet a required QoS based on the two parameters assuming that the selected link has been transferred to the new channel. In one embodiment, the control module 212 or the access point 210 determines whether the QoS level required for the selected link is met or not in the new channel.

For example, if there is a link, supporting a QoS level required for the selected link, in a new channel, the control module 212 or the access point 210 determines that the link of the new channel meets the QoS requirement. If it is determined in procedure 408 that the selected link will not be serviced with the required QoS, the control module 212 or the access point 210 selects another link in procedure 406.

The control module 212 or the access point 210 determines whether the transfer of this selected link (link 3) will cause imbalance in the load (410). For example, if it is assumed that link 3 (load: 1Mbps) is selected and transferred to channel 1, since both of the channels will have the same total load (8Mbps) after the transfer, this transfer is determined not to cause an imbalance in the load. If it is assumed that either link 4 or 5 is selected and transferred from channel 6 to channel 1, since the total load of each of the channels after the transfer is 13:3 or 9:7 (channel 1: channel 6), this transfer of link is determined to cause an imbalance in the load.

If it is determined in procedure 410 that the transfer of the selected link will not cause a load imbalance, the control module 212 or the access point 210 checks an RSSI value of the new channel (channel 1) or the RSSI value of an available link of the new channel (414). As discussed above, the RSSI value can be obtained from the header information (preamble) of a received packet. Thus, the load information showing RSSI may be, for example, updated on a packet-by-packet basis. In one embodiment, the control module 212 or the access point 210 determines whether the new RSSI value (an RSSI value of channel 1 or the RSSI value of an available link of channel 1) is equal to or greater than that of the selected link of the old channel (channel 6) (416). If link 3 is selected to be transferred, the new RSSI value needs to be equal to or greater than the RSSI value (98) of the link 3 of channel 6. In another embodiment, the control module 212 or the access point 210 determines whether the new RSSI value is greater than a threshold RSSI value (416). In one embodiment, if a communication standard changes, a threshold RSSI value also changes.

In one embodiment, if it is determined in procedure 416 that the new RSSI value is equal to or greater than an old RSSI value, or greater than a threshold RSSI value, the selected link is shifted from the old channel (channel 6) to the new channel (channel 1) (418). In one embodiment, the control module 212 or the access point 210 sends a disassociate message notifying that the station associated with the selected link is moved to the new channel so that the associated station releases all the resources and move to the less loaded channel. After the transfer, the new channel (channel 1) will have three links and the old channel (channel 6) will have two links. In another embodiment, the control module 212 or the access point 210 notifies associated stations that the selected link of the old channel is swapped with a link of the new channel as long as the swapping provides a balanced load in the access point 210.

If it is determined in procedure 410 that the transfer of a selected link will cause a load imbalance, the control module 212 or the access point 210 determines whether a load can be shifted from a new channel to an old channel (412). It is assumed that channel 1 includes links 1 and 2 (each link load is assumed 4 and 1, respectively) and channel 6 includes links 3-5 (each link load is assumed 2, 3 and 4, respectively). If link 4 (load: 3) is selected to be transferred from channel 6 to channel 1, the total load of channel 1 after the transfer will be 8 (4+1+3) and the total load of channel 6 will be 6 (2+4). Thus, this transfer will cause a load imbalance because channel 1 has the total load of 8 and channel 6 has the total load of 6. In this situation, the control module 212 or the access point 210 determines whether a load can be shifted from the new channel (channel 1) to the old channel (channel 6) after the first transfer. Since link 2 (load: 1) of channel 1 can be transferred to channel 6, the control module 212 or the access point 210 performs procedure 408. If it is determined in procedure 412 that a load cannot be shifted from the new channel to the old channel, the selected link will not be shifted from the old channel to the new channel (420).

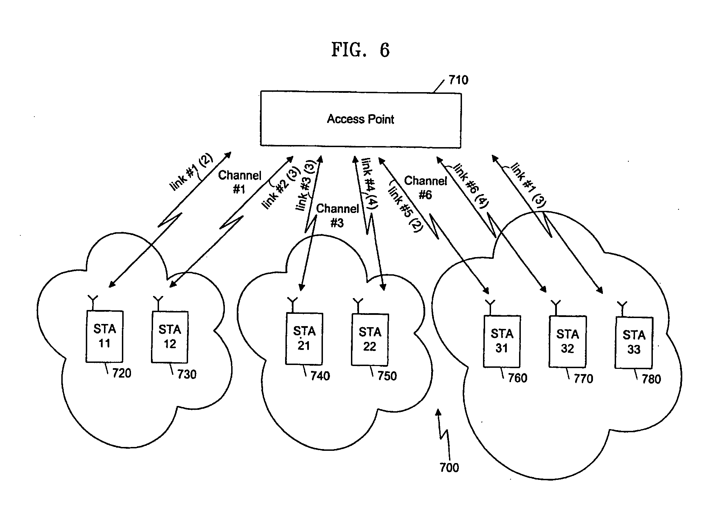

Figure 6 illustrates a load balancing system 700 according to another embodiment of the invention. In one embodiment, the access point 710 is in data communication with other conventional communication network system (not shown). In one embodiment of the invention, the system 700 is implemented with or incorporated into a WLAN, a WPAN, a GPRS network, a GSM network, a CDMA network, a Bluetooth network or other wireless networks. In one embodiment of the invention, data communication within the system 700 and with other communication network is carried out by IEEE 802.11a/11b/11g or IEEE 802.15.3/15.3a or other wireless communication standards.

In one embodiment, the access point 710 handles three different channels (channels 1, 3, 6) as shown in Figure 6. In another embodiment, the access point 710 handles more than three channels (not shown). The operation of the determination and transferring of an overload will be almost the same as those of the system of Figure 2.

In one embodiment, channel 1 includes links 1-2 in which 2 and 3Mbps bandwidth are being used, respectively. Channel 3 includes links 3-4 in which 3 and 4Mbps bandwidth are being used, respectively. Channel 6 includes links 5-7 in which 2, 4 and 3Mbps bandwidth are being used, respectively. In one embodiment, the access point 710 determines that channel 6 is relatively overloaded compared to the other channels. In one embodiment, the access point 710 selects link 5, which has the least load, from channel 6 and transfers the selected link to channel 1, which is relatively underloaded after confirming that the new RSSI value is equal to or greater than the old RSSI value or greater than a (predefined) threshold RSSI value, and that the QoS requirement for the selected link is met in channel 1. This will result in the balance of the overall load (7, 7, 7) in the channels of the access point 710.

While the above description has pointed out novel features of the invention as applied to various embodiments, the skilled person will understand that various omissions, substitutions, and changes in the form and details of the device or process illustrated may be made without departing from the scope of the invention. Therefore, the scope of the invention is defined by the appended claims rather than by the foregoing description. All variations coming within the meaning and range of equivalency of the claims are embraced within their scope.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of load balancing in a terrestrial wireless communication system including an access node (210), the method comprising:
communicating data wirelessly between the access node (210) and a plurality of terminals (220-260) via a plurality of channels, wherein the plurality of terminals (220-260) and the access node (210) form a wireless local area network;
determining, at the access node (210), an overloaded channel from the plurality of channels; and
transferring, at the access node (210), a load from the overloaded channel to a less loaded channel of the plurality of channels.

2. The method of Claim 1, wherein the determining comprises:
calculating loads of each of the plurality of channels based on at least one of: the number of packets pending in each of the channels and bandwidths which are currently being used in each of the channels;
determining the overloaded channel from the plurality of channels based on the calculated loads; and
selecting a link from the overloaded channel.

3. The method of Claim 2, wherein the transferring is performed in case the quality of service level required for the selected link is met in the less loaded channel.

4. The method of Claim 2 or claim 3, wherein the transferring comprises swapping the selected link of the overloaded channel with a link of the less loaded channel.

5. The method of any one of claims 2 to 4, wherein the selecting comprises selecting the least loaded link from the overloaded channel.

6. The method of any one of claims 2 to 5, further comprising determining a received signal strength indication (RSSI) value in the less loaded channel and wherein the transferring is performed if the determined RSSI value is equal to or greater than that of the RSSI value of the selected link, or greater than a threshold RSSI value.

7. The method of any preceding claim, wherein the wireless communication system comprises one of the following: a IEEE 802.11a/11b/11g network, a wireless local area network (WLAN), a wireless personal area network (WPAN), a general packet radio service (GPRS) network, a global system for mobile communication (GSM) network, a code division multiple access (CDMA) network or a Bluetooth network.

8. The method of any preceding claim, wherein the access node (210) includes a plurality of access nodes (210), and wherein each access node performs the determining and transferring independently from each other.

9. A method of load balancing in a wireless communication system including an access point (710), the method comprising:
providing a plurality of channels between the access point (710) and a plurality of terminals (720-780) such that the access point (710) is in data communication with the plurality of terminals via the plurality of channels;
determining an overloaded channel from the plurality of channels based on at least one of: the number of packets pending in each of the channels and bandwidths which are currently being used in each of the channels;
selecting a link from the overloaded channel; and
transferring the selected link to a less loaded channel of the plurality of channels based on at least one of: the quality of service level required for the selected link and a received signal strength indication (RSSI) value in the less loaded channel.

10. A method of load balancing in a wireless communication system including an access point (710), the method comprising:
communicating data between the access point (710) and a plurality of terminals (720-780) via a plurality of channels;
calculating loads of each of the plurality of channels based on at least one of: the number of packets pending in each of the channels and bandwidths which are currently being used in each of the channels;
determining an overloaded channel from the plurality of channels based on the calculated loads;
selecting a link from the overloaded channel;
selecting a new channel, to which the selected link is transferred, from the plurality of channels, wherein the new channel is less loaded than the overloaded channel;
determining the quality of service level required for the selected link and a received signal strength indication (RSSI) value in the new channel; and
transferring the selected link to the new channel in case the determined RSSI value is equal to or greater than that of the selected link or greater than a predefined threshold RSSI value, and in case the quality of service level required for the selected link is met in the new channel.

11. An apparatus for load balancing in a communication system including an access point (210), comprising:
a control module (212) configured to i) communicate data wirelessly between the access point (210) and a plurality of terminals (220-260) via a plurality of channels, wherein the plurality of terminals (220-260) and the access point (210) form a wireless local area network, ii) determine an overloaded channel from the plurality of channels and iii) transfer a load from the overloaded channel to a less loaded channel of the plurality of channels; and
a memory (214), in data communication with the control module (212), configured to store information to be used for the control module (212) performing the load balancing.

12. The apparatus of Claim 11, wherein the control module (212) and the memory (214) are embedded in the access point (210).

13. The apparatus of Claim 11 or claim 12, wherein the access point (210) comprises a multi channel medium access control (MC-MAC) based access point.

14. The apparatus of any one of claims 11 to 13, wherein the control module (212) is further configured to i) calculate loads of each of the plurality of channels based on at least one of: the number of packets pending in each of the channels and bandwidths which are currently being used in each of the channels, ii) determine the overloaded channel from the plurality of channels based on the calculated loads and iii) select a link from the overloaded channel.

15. The apparatus of Claim 14, wherein the control module (212) is further configured to transfer the load in case the quality of service level required for the selected link is met in the less loaded channel.

16. The apparatus of Claim 14 or claim 15, wherein the control module (212) is further configured to determine a received signal strength indication (RSSI) value in the less loaded channel and to transfer the load if the determined RSSI value is equal to or greater than that of the RSSI value of the selected link, or greater than a predefined threshold RSSI value.

17. A system for load balancing in a wireless communication system including at least one access node (210), the or each access node (210) employing a plurality of channels, wherein each access node (210) is configured to determine a load imbalance based on at least one of the number of packets pending in each of the plurality of channels and bandwidths which are currently being used in each of the plurality of channels, and wherein if there is an overloaded channel, the access node (210) is configured to select a link from an overloaded channel, and transfer the selected link to a less loaded channel based on at least one of the quality of service level required for the selected link and a received signal strength indication (RSSI) value in the less loaded channel.

18. A system for load balancing in a terrestrial wireless communication system including an access node (210), comprising:
means for communicating data wirelessly between the access node (210) and a plurality of terminals (220-260) via a plurality of channels, wherein the plurality of terminals (220-260) and the access node (210) form a wireless local area network;
means for determining, at the access node (210), an overloaded channel from the plurality of channels; and
means for transferring, at the access node (210), a load from the overloaded channel to a less loaded channel of the plurality of channels.

19. The system of Claim 18, wherein the determining means comprises:
means for calculating loads of each of the plurality of channels based on at least one of: the number of packets pending in the each of channels and bandwidths which are currently being used in each of the channels;
means for determining the overloaded channel from the plurality of channels based on the calculated loads; and
means for selecting a link from the overloaded channel.

20. The system of Claim 19, wherein the transferring means is configured to transfer the load in case the quality of service level required for the selected link is met in the less loaded channel.

21. The system of Claim 19 or claim 20, wherein the selecting means is configured to select the least loaded link from the overloaded channel.

22. The system of any one of claims 19 to 21, further comprising means for determining a received signal strength indication (RSSI) value in the less loaded channel and wherein the transferring means is configured to transfer the load if the determined RSSI value is equal to or greater than that of the RSSI value of the selected link, or greater than a threshold RSSI value.

23. A computer readable medium storing a program which performs a method of load balancing in a terrestrial wireless communication system including an access node (210), the method comprising:
communicating data wirelessly between the access node (210) and a plurality of terminals (220-260) via a plurality of channels, wherein the plurality of terminals and the access node (210) form a wireless local area network;
determining, at the access node (210), an overloaded channel from the plurality of channels; and
transferring, at the access node (210), a load from the overloaded channel to a less loaded channel of the plurality of channels.
